# EUROPÄISCHE PATENTSCHRIFT

(11) **EP 3 184 863 B1**
(45) Veröffentlichungstag und Bekanntmachung des Hinweises auf die Patenterteilung: **24.10.2018**
(21) Anmeldenummer: 15201681.2
(22) Anmeldetag: 21.12.2015
(51) Int. Cl.: F16J 3/04

(54) **MEMBRANBALG**
MEMBRANE BELLOWS
SOUFFLET A MEMBRANE

(43) Veröffentlichungstag der Anmeldung: 28.06.2017
(73) Patentinhaber: VAT Holding AG, 9469 Haag (CH)
(72) Erfinder: Wellner, Marc, 9473 Gams (CH); Steger, Fabian, 9463 Oberriet (CH)
(74) Vertreter: Hofmann, Ralf U.

(56) Entgegenhaltungen:
- US-B1- 6 485 007

## Beschreibung

Die Erfindung bezieht sich auf einen Membranbalg mit einer Mehrzahl von Membranen mit äußeren Rändern und inneren Rändern, wobei in Richtung der zentralen Längsachse des Membranbalgs aufeinanderfolgende Membrane wechselweise im Bereich ihrer inneren Ränder und im Bereich ihrer äußeren Ränder miteinander verschweißt sind.

Membranbälge werden in der Regel als flexibles Dichtungselement eingesetzt, um in einer Anwendung verschiedene Druckbereiche zu trennen. So werden Membranbälge beispielsweise für Vakuumdurchführungen von Vakuumventilen eingesetzt, wobei der Membranbalg die Antriebsstange des Ventils umhüllt und beim Öffnen und Schließen des Ventils den Vakuumbereich vom Atmosphärenbereich trennt. Neben Anwendungen für Vakuumdurchführungen zur Bewegungseinleitung ins Vakuum können Membranbälge beispielsweise als Kompensatoren zur Aufnahme von Wärmeausdehnungen oder Montagetoleranzen eingesetzt werden. Eine weitere Anwendung besteht beispielsweise in der Schwingungsentkopplung in einem Vakuumsystem, z.B. zwischen einer Vakuumpumpe und einem Messgerät.

Membranbalge bestehen aus wechselseitig an ihren äußeren und inneren Rändern miteinander verschweißten Membranen. Bei der Herstellung werden zunächst Membranpaare an ihren inneren Rändern miteinander verschweißt und in der Folge die Membranpaare aneinander gereiht und an ihren äußeren Rändern miteinander verschweißt. Mit solchen Membranbälgen ist ein Hub in axialer und/oder lateraler und/oder angularer Richtung möglich.

Neben Membranbälgen sind Wellbälge bekannt, bei denen Rohre balgartig verformt werden, wodurch eine Beweglichkeit erreicht wird. Spezielle Ausbildungen von Wellbälgen gehen beispielsweise aus der US 4,650,160 A und GB 2 062 132 A hervor.

Beim Einsatz von Membranbälgen kommt es meist zu Druckdifferenzen zwischen dem Innenraum und der Außenseite des Membranbalgs, wobei der Druck im Inneren des Membranbalgs kleiner oder größer sein kann als der außerhalb des Membranbalgs vorliegende Druck sein kann. Aufgrund von solchen Druckdifferenzen (insbesondere wenn im Inneren des Membranbalgs ein höherer Druck vorherrscht als außerhalb des Membranbalgs) und/oder durch die Schwerkraft kann es aufgrund der geringen Seitensteifigkeit des Membranbalgs zu einem mehr oder weniger starken seitlichen Ausknicken des Membranbalgs kommen, wenn der Membranbalg ausreichend lang ist. Beispielsweise kann sich hierdurch der Membranbalg in Bereichen der Verschweißungen der inneren Ränder der Membrane an eine durch die innere Durchgangsöffnung des Membranbalgs verlaufende Stange (z.B. Antriebsstange eines Vakuumventils) anlegen. Bei einer Verschiebung der Stange kommt es somit zu einer Reibung der inneren Ränder der Membrane auf der Stange, was zu einem Verschleiß der Schweißnähte zwischen der inneren Ränder der Membrane führt, wodurch im Laufe der Zeit Beeinträchtigungen der Festigkeit dieser Schweißnähte und Lecks auftreten können.

Es wurden daher bereits Führungsteile zur Führung des Membranbalgs in mittleren Bereichen seiner Längserstreckung eingesetzt. Ein solcher Membranbalg geht aus der US 2002/0175480 A1 hervor. Aus dieser Schrift gehen im Inneren des Membranbalgs angeordnete Gleitführungsringe zur Führung auf der äußeren Oberfläche einer Stange hervor, welche die innere Durchgangsöffnung durch den Membranbalg durchsetzt. Die Gleitführungsringe weisen nach außen vorstehende Vorsprünge auf, die in den Raum zwischen benachbarten Membranen des Membranbalgs ragen und den Gleitführungsring formschlüssig gegen eine Verschiebung in axialer Richtung des Membranbalgs festlegen. Die inneren Ränder der beiden Membrane, zwischen denen ein jeweiliger Gleitführungsring gehalten ist, liegen auf der äußeren Mantelfläche des Gleitführungsrings auf. Im zusammengedrückten Zustand des Membranbalgs sind auch die inneren Ränder von benachbarten Membranen über der äußeren Mantelfläche des Gleitführungsrings angeordnet.

Beim aus der CN 203 363 518 U bekannten Membranbalg ist zwischen zwei Abschnitten des Membranbalgs ein massiver Abstützring eingeschweißt.

Die JP 2013221596 A zeigt einen Balg mit scherenförmig ausgebildeten Führungsgliedern. Es handelt sich um eine aufwendige Konstruktion.

Aus der US 4,183,289 A geht ein Balg mit einer Einrichtung zur Begrenzung des Auseinanderziehens hervor.

Die US 6,485,007 B1 zeigt einen Membranbalg mit einer Mehrzahl von Hülsenteilen, welche den Membranbalg insgesamt über seine gesamte Länge umgeben, wobei aufeinanderfolgende Hülsenteile je nach Stellung des Membranbalgs einander mehr oder weniger überlappen. Diese Hülsenteile dienen zur Verhinderung des Eindringens von Schmutzpartikeln und Fremdkörpern zwischen die Membrane. Die mittleren Hülsenteile sind mit einer nutartigen Vertiefung auf die äußeren Ränder eines miteinander verbundenen Membranpaars aufgeschnappt.

Aufgabe der Erfindung ist es einen Membranbalg der eingangs genannten Art bereitzustellen, durch den eine vorteilhafte Führung des Membranbalgs gegen ein seitliches Ausknicken ermöglicht wird. Erfindungsgemäß gelingt dies durch einen Membranbalg mit den Merkmalen des Anspruchs 1.

Die Gleitführungseinrichtung gemäß der Erfindung weist mindestens zwei Ringteile auf, welche sich in Umfangsrichtung um die Längsachse des Membranbalgs (=bezogen auf den Polarwinkel von Zylinderkoordinaten, deren z-Achse mit der Längsachse des Membranbalgs zusammenfällt) jeweils über weniger als 180° erstrecken. Die Ringteile besitzen jeweils einen Führungsabschnitt und einen vom Führungsabschnitt in Richtung zur Längsachse abstehenden Halterungsabschnitt. Der Halterungsabschnitt ragt von radial außen her in einen Zwischenraum, der zwischen zwei benachbarten Membranen liegt, die im Bereich ihrer inneren Ränder miteinander verschweißt sind. Der Führungsabschnitt erstreckt sich radial außerhalb dieser beiden benachbarten Membrane, zwischen die der Halterungsabschnitt ragt. Der Führungsabschnitt weist eine von der Längsachse des Membranbalgs weggerichtete Führungsfläche auf. Diese dient zur Gleitführung auf der inneren Oberfläche eines den Membranbalg zumindest über einen Teil seiner Längserstreckung (=die Erstreckung des Membranbalgs in Richtung seiner Längsachse) umgebenden Rohrs.

Die Ringteile können somit in einfacher Weise von der Außenseite des Membranbalgs her in den Zwischenraum zwischen zwei benachbarten Membranen eingesteckt werden, wobei vorteilhafterweise eine Schnappverbindung zwischen dem jeweiligen Ringteil und den Membranen, zwischen welche das Ringteil eingesteckt wird, ausgebildet wird. Wie eine solche Schnappverbindung ausgebildet werden kann, ist weiter unten genauer erläutert.

Durch die erfindungsgemäße Ausbildung kann auch eine Nachrüstung eines Membranbalgs mit einer Gleitführungseinrichtung auf einfache Weise ermöglicht werden.

Durch die Gleitführung entlang der inneren Oberfläche des den Membranbalg umgebenden Rohrs wird eine Partikelproduktion im Inneren des Membranbalgs, wie diese bei einer Gleitführung entlang der äußeren Oberfläche einer die Durchgangsöffnung durch den Membranbalg durchsetzenden Stange auftritt, vermieden. Für gegenüber auftretenden Partikeln im Vakuum sensible Anwendungen ist dies vorteilhaft.

Eine erfindungsgemäße Gleitführungseinrichtung kann auch dann eingesetzt werden, wenn keine die Durchgangsöffnung durch den Membranbalg durchsetzende Stange vorhanden ist oder wenn eine solche Stange nur einen so geringen Abstand von den inneren Rändern der Membrane aufweist, dass dieser zu gering ist, um einen inneren Gleitführungsring im Membranbalg zu verwenden.

Vorteilhafterweise weist der Halterungsabschnitt bezogen auf die Richtung der Längsachse des Membranbalgs zumindest auf einer Seite eine Vertiefung, die mit einer Erhebung der an den Halterungsabschnitt auf dieser Seite angrenzenden Membran zusammenwirkt, oder eine Erhebung auf, die mit einer Vertiefung der an den Halterungsabschnitt auf dieser Seite angrenzenden Membran zusammenwirkt. Besonders vorteilhaft ist es, wenn der Halterungsabschnitt auf der einen Seite eine Vertiefung, die mit einer Erhebung der an den Halterungsabschnitt auf dieser Seite angrenzender Membran zusammenwirkt, und auf der anderen Seite eine Erhebung aufweist, die mit einer Vertiefung der an den Halterungsabschnitt auf dieser Seite angrenzenden Membran zusammenwirkt. Durch das Zusammenwirken der mindestens einen Erhebung des Halterungsabschnitts mit der zugeordneten Vertiefung der dem Halterungsabschnitt benachbarten Membran und/oder der mindestens einen Vertiefung des Halterungsabschnitts mit der zugeordneten Erhebung der benachbarten Membran kann der Halterungsabschnitt formschlüssig gegen ein Herausziehen aus dem Zwischenraum zwischen den beiden Ringteilen, in welchen der Halterungsabschnitt ragt, gehalten sein, und zwar bezogen auf die Stellung des Membranbalgs, welchen dieser einnimmt, wenn keine äußere Kraft auf den Membranbalg einwirkt. Diese Stellung des Membranbalgs wird im Weiteren als "neutrale Stellung" des Membranbalgs bezeichnet.

In dieser neutralen Stellung des Membranbalgs sind die Ringteile somit formschlüssig gegen ein Herausfallen aus dem Zwischenraum zwischen den Membranen, zwischen welche die Halterungsabschnitte der Ringteile eingesteckt sind, gehalten. In jeder gegenüber dieser neutralen Stellung des Membranbalgs komprimierten Stellung des Membranbalgs sind die Ringteile somit ebenfalls formschlüssig gegen ein Herausfallen gehalten. Günstigerweise liegt ein Formschluss, welcher die Ringteile gegen ein Herausfallen hält, auch dann noch vor, wenn der Membranbalg gegenüber seiner neutralen Stellung bis zu einem bestimmten Grenzwert der Länge des Membranbalgs auseinandergezogen ist. Bei einem für den Membranbalg spezifizierten maximalen Auseinanderziehen des Membranbalgs, für welches eine vorgegebene Lebensdauer an Zyklen des Auseinanderziehens und Zusammendrückens erreicht wird, liegt die Länge des Membranbalgs vorteilhafterweise unter dem genannten Grenzwert.

Durch die zuvor beschriebene Ausbildung kann eine Schnappverbindung zwischen den Ringteilen und dem in seiner neutralen Stellung sich befindenden Membranbalg ausgebildet werden, d.h. die Halterungsabschnitte schnappen, wenn sie in den Zwischenraum zwischen den benachbarten Membranen eingesteckt werden, in mindestens eine Erhebung und/oder Vertiefung dieser Membrane ein.

Vorzugsweise erstrecken sich die Führungsabschnitte der mindestens zwei Ringteile der Gleitführungseinrichtung in Summe über mehr als 180° in Umfangsrichtung um die Längsachse des Membranbalgs (=erstrecken sich über einen Polarwinkel von mehr als 180° von Zylinderkoordinaten, deren z-Achse mit der Längsachse des Membranbalgs zusammenfällt), wobei die Halterungsabschnitte der mindestens zwei Ringteile in den Zwischenraum zwischen den gleichen beiden benachbarten Membrane eingesteckt sind. Es kann dadurch in beliebigen Lagen der Ringteile, die diese bezogen auf die Umfangsrichtung um die Längsachse einnehmen, sichergestellt werden, dass die äußeren Ränder der Membrane im Bereich der Längserstreckung des Membranbalgs, in welchem die Gleitführungseinrichtung angeordnet ist, im Abstand von der inneren Oberfläche des Rohrs gehalten sind.

Eine vorteilhafte Ausführungsform sieht vor, dass die Führungsfläche des Führungsabschnitts in eine von der Längsachse des Membranbalgs wegweisende Richtung gewölbt ausgebildet ist. Es kann dadurch ein Linienkontakt zwischen der Führungsfläche und der inneren Oberfläche des Rohrs ausgebildet werden, wodurch Reibung und Verschleiß reduziert werden können.

Wenn im Rahmen dieser Schrift von "innen" und "außen" die Rede ist, so ist dies auf die Lage relativ zur Längsachse des Membranbalgs bezogen, d.h. ein weiter innen liegendes Teil liegt näher bei der zentralen Längsachse des Membranbalgs als ein weiter außen liegendes Teil.

Weitere Vorteile und Einzelheiten der Erfindung werden im Folgenden anhand der beiliegenden Zeichnung erläutert.
Fig. 1 eine Schrägsicht eines Membranbalgs gemäß der Erfindung mit an beiden Enden angebrachten Endstücken und einer den Membranbalg durchsetzenden Stange, wobei sich der Membranbalg in seiner neutralen Stellung befindet;
Fig. 2 die Einheit von Fig. 1, wobei die Ringteile von den Membranen abgenommen dargestellt sind;
Fig. 3 eine Seitenansicht (rechtwinkelig zur Längsachse des Membranbalgs), wobei an einem der Endstücke zusätzlich ein Rohr zur Führung des Membranbalgs angebracht ist;
Fig. 4 einen Schnitt entlang der Linie AA von Fig. 3;
Fig. 5 ein vergrößertes Detail B von Fig. 4;
Fig. 6 und 7 eine Schrägsicht und eine Ansicht einer der Membrane des Membranbalgs;
Fig. 8, 9, 10 und 11 Darstellungen analog den Fig. 1, 2, 4 und 5, aber in einer gegenüber der neutralen Stellung des Membranbalgs weiter zusammengedrückten Stellung des Membranbalgs;
Fig. 12, 13, 14 und 15 Darstellungen analog den Fig. 1, 2, 4 und 5, aber in einer gegenüber der neutralen Stellung des Membranbalgs weiter auseinandergezogenen Stellung des Membranbalgs;
Fig. 16, 17 und 18 Längsmittelschnitte analog den Fig. 4, 10 und 14 in einer möglichen Anwendung des Membranbalgs.

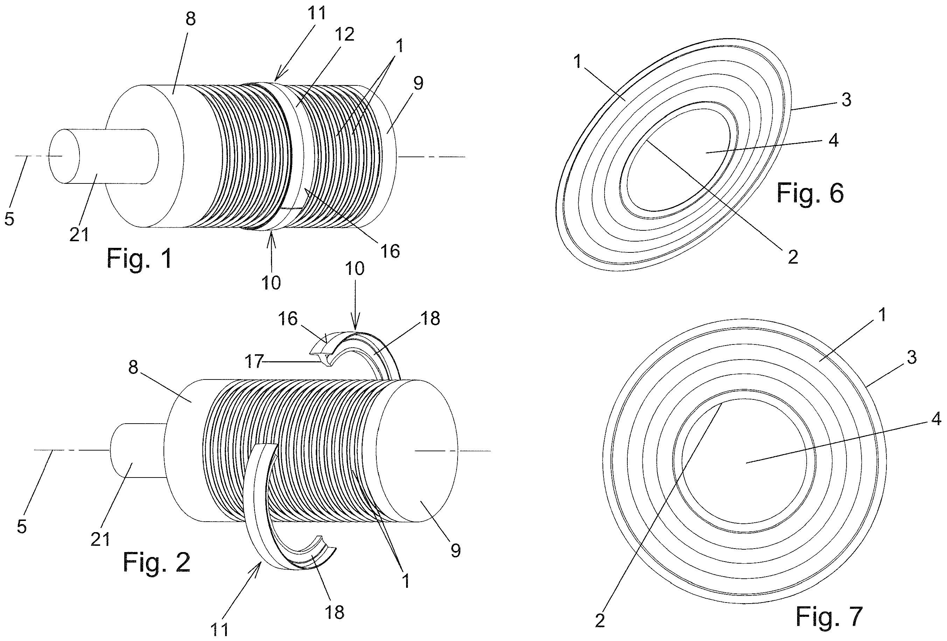

Ein Ausführungsbeispiel eines Membranbalgs gemäß der Erfindung wird im Folgenden anhand der Fig. 1 bis 15 erläutert.

Der Membranbalg umfasst eine Mehrzahl von Membranen 1, welche auch als Membranscheiben oder Ringmembrane oder Lamellen bezeichnet werden können. Eine jeweilige Membran besitzt einen äußeren Rand 3 und einen inneren Rand 2, der eine zentrale Öffnung 4 der Membran 1 begrenzt. Die inneren und äußeren Ränder 2, 3 der Membrane weisen Kreisformen auf. Im gezeigten Ausführungsbeispiel besitzen alle Membrane gleiche Radien ihrer inneren Ränder 2 und gleiche demgegenüber größere Radien ihrer äußeren Ränder 3, wie dies bevorzugt ist. Die Membrane sind insbesondere rotationssymmetrisch ausgebildet.

Die Membrane 1 sind konzentrisch zu einer zentralen Längsachse 5 des Membranbalgs angeordnet. Die zentralen Öffnungen 4 der Membrane 1 bilden zusammen eine Durchgangsöffnung durch den Membranbalg.

Die Membrane weisen eine gewellte Form auf. Die Wellungen der Membrane 1 überlagern eine vorzugsweise kegelige Grundform der Membrane. Der Außendurchmesser der Membrane 1 ist hierbei günstigerweise mehr als 5 mal größer als die Höhe (=Ausdehnung in Richtung der Längsachse 5) dieser kegeligen Grundform.

Es sind vorzugsweise zwei etwas unterschiedliche Ausbildungen von Membranen vorhanden, die wechselweise aufeinanderfolgen, wie dies bekannt ist. Aufeinanderfolgende Membrane sind so angeordnet, dass ihre kegeligen Grundformen in entgegengesetzte Richtungen weisen.

Die Membrane 1 bestehen aus Blech mit einer Dicke, die vorzugsweise im Bereich von 0,05mm bis 0,5mm, besonders bevorzugt im Bereich von 0,075mm bis 0,2mm liegt. Beispielsweise bestehen die Membrane 1 aus Stahlblech, insbesondere in Form von Austnit oder ferritischem Austnit. Eine Ausbildung aus anderen Metallen ist möglich, z.B. einer Nickel-Basis-Legierung oder Titan.

In Richtung der Längsachse 5 des Membranbalgs aufeinanderfolgende Membrane 1 sind abwechselnd an ihren inneren Rändern 2 und an ihren äußeren Rändern 3 miteinander verschweißt, wodurch sich eine ziehharmonikaartige Ausbildung ergibt. Zwischen aufeinanderfolgenden Membranen 1 liegen somit wechselweise nach außen und nach innen offene Zwischenräume 6, 7 vor.

Die Wellungen der Membrane 1 bilden bezogen auf die Richtung der zentralen Längsachse 5 des Membranbalgs Erhebungen und Vertiefungen an den beiden Seiten der Membrane aus. Somit sind an jeder der beiden Seitenflächen (=Großflächen) einer jeweiligen Membran 1 Erhebungen und Vertiefungen ausgebildet, die eine jeweilige parallel zur Richtung der Längsachse 5 gemessene Höhe bzw. Tiefe aufweisen. Im Ausführungsbeispiel weist eine jeweilige Seitenfläche zwei Erhebungen und zwei Vertiefungen auf. Es könnten auch mehr oder weniger Erhebungen und/oder Vertiefungen vorgesehen sein. Eine jeweilige Seitenfläche könnte auch nur eine Erhebung oder nur eine Vertiefung aufweisen.

An den beiden Enden des Membranbalgs sind in der Ausbildung gemäß den beiliegenden Figuren Endstücke 8, 9 angeschweißt. Diese dienen zur Verbindung des Membranbalgs mit weiteren Teilen einer Vakuumanlage. Denkbar und möglich wäre es auch, dass das Endstück 8 und/oder 9 entfällt und der Membranbalg an einem Ende oder beiden Enden direkt an andere Teile der Vakuumanlage angeschweißt ist.

Am Membranbalg endseitig angeschweißte Endstücke können unterschiedliche Formen aufweisen.

Die Ausbildung des Membranbalgs ist soweit bisher beschrieben bekannt.

Der Membranbalg weist eine Gleitführungseinrichtung zur Führung an einem Führungselement auf, das ein den Membranbalg zumindest über einen Teil seiner Längserstreckung umgebendes Rohr 14 ist. Die Gleitführungseinrichtung wird im Ausführungsbeispiel von zwei Ringteilen 10, 11 gebildet. In modifizierten Ausführungsbeispielen könnte die Gleitführungseinrichtung auch von mehr als zwei Ringteilen gebildet werden. Ein jeweiliges Ringteil weist einen Führungsabschnitt 12 und einen von diesem nach innen (=in Richtung zur Längsachse 5) abstehenden Halterungsabschnitt 13 auf. Der Halterungsabschnitt 13 ragt in einen nach außen offenen Zwischenraum 6 zwischen zwei benachbarten Membranen 1, welche im Bereich ihrer inneren Ränder 2 miteinander verschweißt sind. Die Halterungsabschnitte 13 legen die Ringteile 10, 11 auch formschlüssig gegen eine Verschiebung in Richtung der Längsachse 5 des Membranbalgs fest. Die Halterungsabschnitte 13 der Ringteile 10, 11 der Gleitführungseinrichtung ragen in den gleichen Zwischenraum 6 zwischen zwei benachbarten Membranen 1.

Die Ringteile 10, 11 liegen konzentrisch zu den Membranen.

Der Führungsabschnitt erstreckt sich radial außerhalb der beiden Membrane 1, zwischen denen der Zwischenraum 6 liegt, in welchen der Halterungsabschnitt 13 dieses Ringteils 10, 11 ragt. Der Führungsabschnitt 12 erstreckt sich somit auch radial außerhalb der mit diesen beiden Membranen 1 im Bereich ihrer äußeren Ränder 3 verschweißten Membrane 1. Zumindest in einer Stellung des Membranbalgs, in welcher der Membranbalg gegenüber seiner neutralen Stellung zusammengedrückt ist, erstreckt sich der Führungsabschnitt 12 auch radial außerhalb der beiden Membranpaare, die im Bereich ihrer äußeren Ränder 3 miteinander verschweißt sind und beidseitig an die beiden im Bereich ihrer äußeren Ränder 3 verschweißten Membranpaare anschließen, die beidseitig an den Halterungsabschnitt 13 angrenzen.

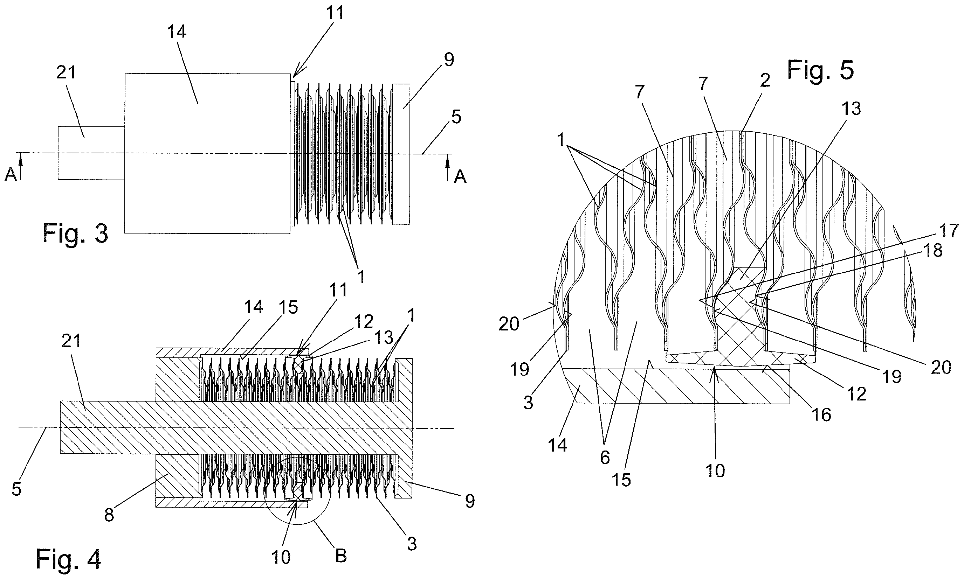

Die Führungsabschnitte 12 der Ringteile 10, 11 dienen zur Gleitführung des Membranbalgs an der inneren Oberfläche 15 eines den Membranbalg zumindest über einen Teil seiner Längserstreckung (=Ausdehnung in Richtung der Längsachse 5) umgebenden Rohrs 14. Ein solches Rohr 14 ist beispielsweise in Fig. 4 dargestellt. Das Rohr 14 ist hier an einem der Endstücke 8 festgelegt, insbesondere durch Verschweißen. Mit der inneren Oberfläche 15 des Rohrs 14 wirkt eine von der Längsachse des Membranbalgs weggerichtete Führungsfläche 16 des jeweiligen Führungsabschnitts 12 zusammen. Im Längsmittelschnitt durch den Membranbalg gesehen, vgl. z.B. Fig. 4 und Fig. 5, ist die Führungsfläche 16 im Ausführungsbeispiel gewölbt ausgebildet, beispielsweise kreisbogenförmig gewölbt. Es kann damit ein Linienkontakt mit der Oberfläche 15 erreicht werden.

Der vom Führungsabschnitt 12 nach innen abstehende Halterungsabschnitt 13, der in den Zwischenraum 6 zwischen den benachbarten Membranen 1 ragt, weist an einer seiner Seitenflächen eine Erhebung 17 und an der gegenüberliegenden Seitenfläche eine Vertiefung 18 auf. Im zentralen Längsmittelschnitt durch den Membranbalg gesehen, vgl. z.B. Fig. 4 und 5, besitzt die Erhebung 17 eine parallel zur Längsachse 5 gemessene Höhe und die Vertiefung 18 eine parallel zur Längsachse 5 gemessene Tiefe. Die Erhebung 17 des Halterungsabschnitts 13 wirkt mit einer Vertiefung 19 der auf dieser Seite an den Halterungsabschnitt 13 angrenzenden Membran 1 zusammen. Die Vertiefung 18 wirkt mit einer Erhebung 20 der auf dieser Seite an den Halterungsabschnitt 13 angrenzenden Membran 1 zusammen. In der Stellung, welche der Membranbalg ohne einwirkende äußere Kräfte einnimmt, also in der neutralen Stellung des Membranbalgs, ragt die Erhebung 17 des Halterungsabschnitts 13 in die Vertiefung 19 der Membran 1 und die Erhebung 20 der Membran 1 ragt in die Vertiefung 18 des Halterungsabschnitts 13. Die Ringteile 10, 11 sind dadurch formschlüssig gegen ein Herausziehen aus dem Zwischenraum 6 zwischen den Membranen 1 gesichert.

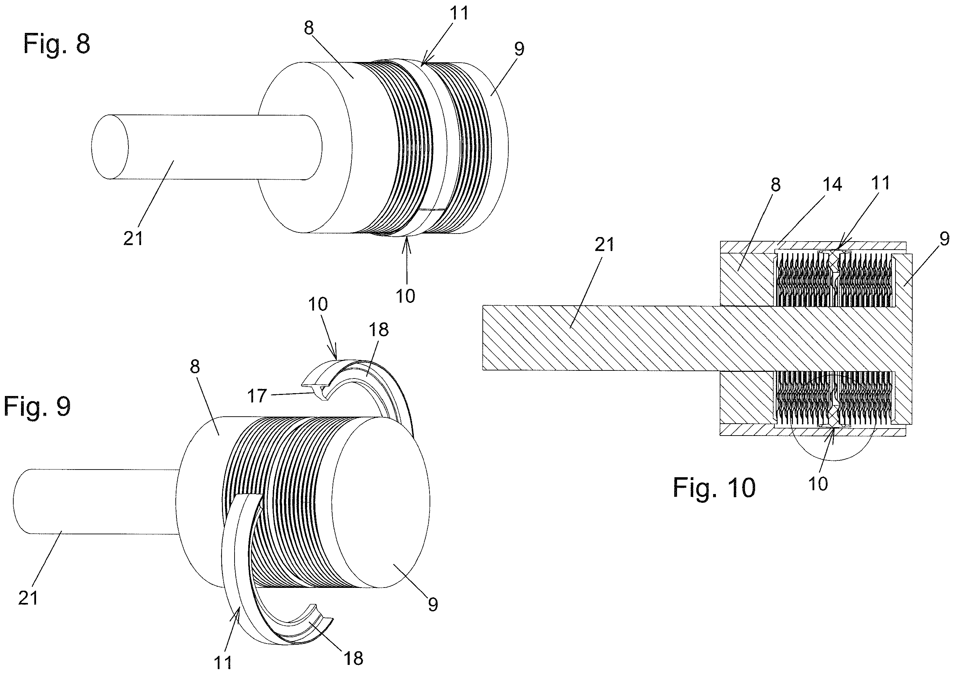

Dieser Formschluss bleibt bestehen, wenn der Membranbalg ausgehend von seiner neutralen Stellung zusammengedrückt wird. In den Fig. 8 bis 11 ist die Stellung des Membranbalgs dargestellt, bis zu welcher der Membranbalg vorzugsweise maximal zusammengedrückt wird, um eine möglichst lange Lebensdauer des Membranbalgs zu erreichen.

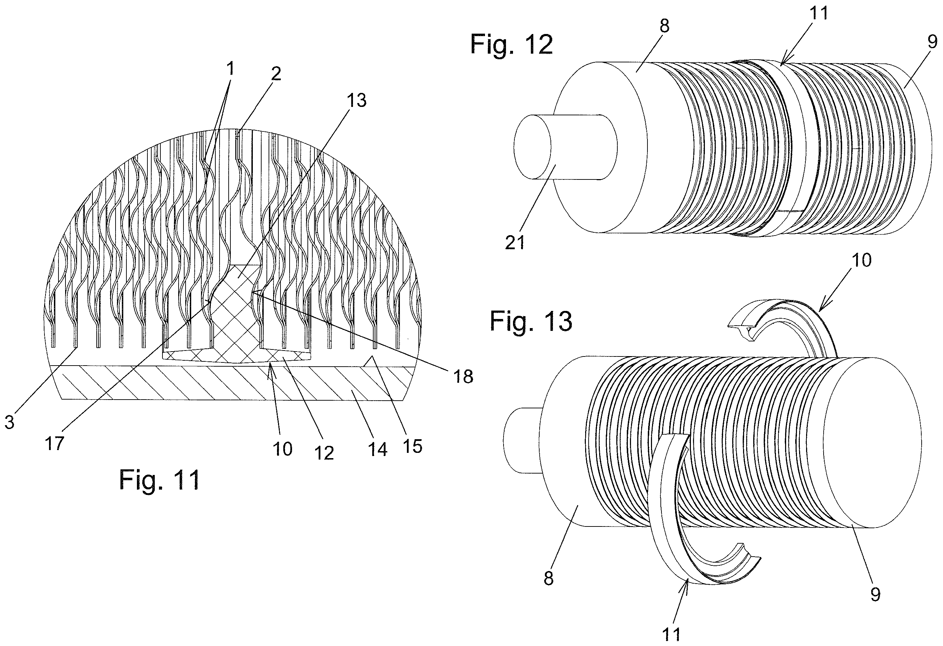

In den Fig. 12 bis 15 ist eine Stellung des Membranbalgs dargestellt, in welcher dieser gegenüber seiner neutralen Stellung gedehnt ist. Vorzugsweise wird der Membranbalg bis zu höchstens dieser Stellung gedehnt, um eine lange Lebensdauer des Membranbalgs zu erreichen. In dieser Stellung liegt nach wie vor ein Formschluss vor, der einem Herausziehen der Halterungsabschnitte 13 und somit der Ringteile 10, 11 aus dem Zwischenraum 6 zwischen den Membranen 1 entgegenwirkt.

Wenn der Membranbalg höchstens bis zur in den Fig. 8 bis 11 dargestellten Stellung zusammengedrückt wird und höchstens bis zu der in den Fig. 12 bis 15 dargestellten Stellung auseinandergezogen wird, so wird eine spezifizierte Anzahl von Zyklen des Zusammendrückens und Auseinanderziehens erreicht. Wenn eine demgegenüber geringere Anzahl von Zyklen ausreichend ist, kann der Membranbalg demgegenüber stärker zusammengedrückt und/oder auseinandergezogen werden.

Wenn ein Ringteil 10, 11 mit seinem Halterungsabschnitt 13 in den Zwischenraum 6 zwischen den Membranen 1 eingesteckt wird, und zwar in einer Stellung des Membranbalgs, in welcher im eingesteckten Zustand ein Formschluss zwischen dem Halterungsabschnitt 13 und den benachbarten Membranen 1 vorliegt, so werden die Membrane 1 beim Einstecken des Halterungsabschnitts 13 unter Vergrößerung des Zwischenraums 6 auseinandergedrückt und ziehen sich dann durch ihre Elastizität unter Verkleinerung des Zwischenraums 6 wieder zusammen, sodass die Erhebungen 17, 20 und Vertiefungen 19, 18 ineinander eingreifen. Es wird somit eine Schnappverbindung zwischen den Ringteilen 10, 11 und den Membranen 1 ausgebildet.

Der Halterungsabschnitt 13 könnte auch nur auf einer seiner Seiten eine Erhebung oder Vertiefung aufweisen, die mit einer Vertiefung oder Erhebung der auf dieser Seite angrenzenden Membran 1 zusammenwirkt, um einen Formschluss zwischen dem Halterungsabschnitt 13 und den Membranen 1 auszubilden (bezogen auf die neutrale Stellung des Membranbalgs). Der Halterungsabschnitt 13 könnte auf einer Seite oder auf beiden Seiten auch sowohl eine Erhebung als auch eine Vertiefung aufweisen.

Vorteilhafterweise korrespondieren die Konturen der Seitenflächen des Halterungsabschnitts 13 mit den Konturen der angrenzenden Membrane 1 in der neutralen Stellung des Membranbalgs, wie dies insbesondere aus Fig. 5 ersichtlich ist. Besonders bevorzugt ist es, wenn der Halterungsabschnitt 13 bezogen auf den Längsmittelschnitt mit der Form ausgebildet ist, welche der Form entspricht, die der Zwischenraum 6 über die radiale Ausdehnung des Halterungsabschnitts 13 in der neutralen Stellung des Membranbalgs einnimmt, wenn kein Halterungsabschnitt 13 in den Zwischenraum 6 eingesteckt ist. D.h. in der neutralen Stellung des Membranbalgs erfährt der Membranbalg durch die eingesteckten Halterungsabschnitte 13 keine Verformung. Es nimmt damit auch die in Richtung der Längsachse 5 des Membranbalgs gemessene Dicke des Halterungsabschnitts 13 in radialer Richtung zur Längsachse 5 hin ab.

Günstigerweise besitzen die Ringteile 10, 11 im Längsmittelschnitt durch den Membranbalg gesehen eine T-Form, wobei diese auch asymmetrisch sein könnte (d.h. der eine vorspringende Teil des Führungsabschnitts ist kürzer als der andere). Grundsätzlich wäre beispielsweise auch eine L-Form möglich.

Wenn ein vorspringender Führungsabschnitt 12 ganz entfallen würde, sodass also der äußere stirnseitige Rand des Halterungsabschnitts 13 die Führungsfunktion übernehmen würde, müsste verhindert werden, dass der Halterungsabschnitt 13 nicht so weit nach innen gedrückt wird, dass sein äußerer Rand radial innerhalb des äußeren Randes 3 der Membranen 1 liegt, beispielsweise durch einen ausreichenden Formschluss des Halterungsabschnitts 13 mit den Membranen 1 und/oder dadurch, dass der Membranbalg nicht zu weit auseinandergezogen wird. Durch eine Ausbildung mit einem vorspringenden Führungsabschnitt 12, der sich zumindest an den äußeren Rändern 3 der beidseitig des Halterungsabschnitts 13 liegenden Membranpaare 1 abstützen kann, liegt die Führungsfläche 16 aber jedenfalls radial außerhalb der äußeren Ränder 3 der Membrane 1.

Um ein Einstecken der Ringteile 10, 11 zwischen die Membrane 1 zu ermöglichen, nachdem alle Membrane 1 miteinander verschweißt worden sind, erstrecken sich die Ringteile 10, 11 jeweils über höchstens 180° in Umfangsrichtung um die Längsachse 5.
Im Ausführungsbeispiel sind zwei Ringteile 10, 11 vorgesehen, die jeweils als Halbring ausgebildet sind und im zwischen die gleichen Membrane 1 eingesteckten Zustand zusammen einen die Membrane 1 vollständig umgebenden Ring ausbilden. Ein solcher die Membrane 1 vollständig umgebender Ring könnte auch durch mehr als zwei Ringteile ausgebildet werden, beispielsweise durch drei sich jeweils über 120° erstreckende Ringteile.

Die zwischen die gleichen Membrane 1 eingesteckten zwei oder mehr Ringteile 10, 11 erstrecken sich insgesamt jedenfalls vorzugsweise über mehr als 180° in Umfangsrichtung um die Längsachse 5.

Die Ringteile 10, 11 bestehen in einer vorteilhaften Ausführungsform aus Kunststoff, beispielsweise PTFE (Polytetrafluorethylen), PTFE polymerverstärkt, PEEK (Polyether ether ketone) oder Polyimid. In anderen Ausführungsformen können die Ringteile 10, 11 aus Metall ausgebildet sein, gegebenenfalls beschichtet, insbesondere im Bereich der Führungsfläche 16. Auch Kombinationen aus Kunststoff und metallischen Werkstoffen sind denkbar und möglich.

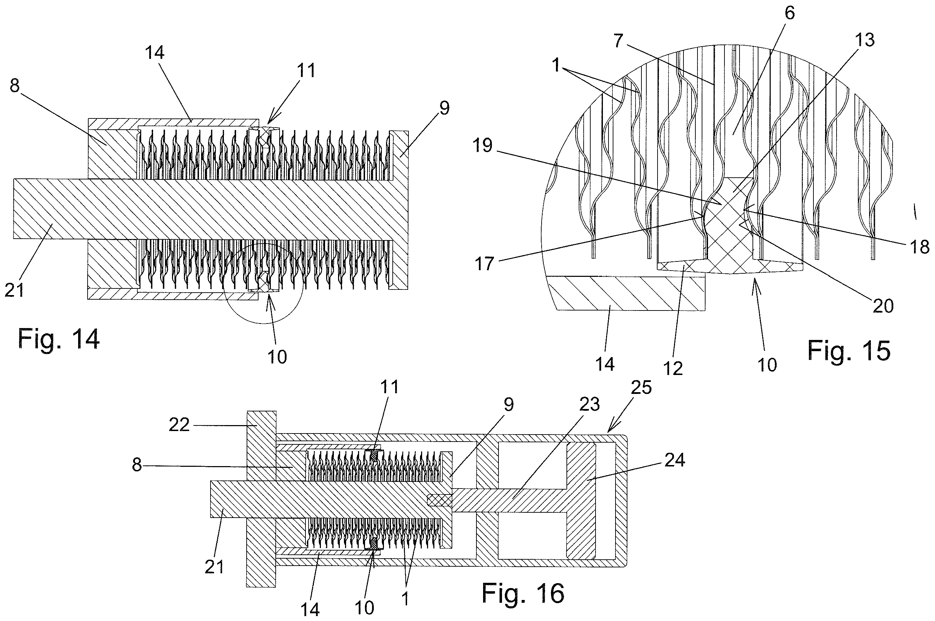

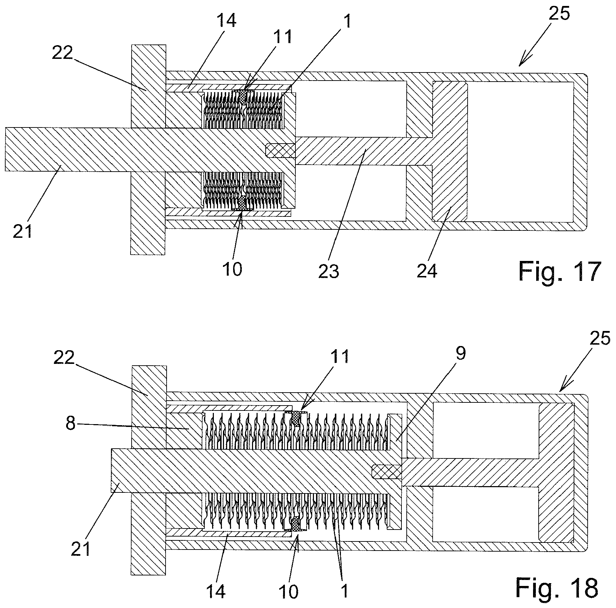

In den Fig. 1 bis 15 ist eine Stange 21 dargestellt, die an einem der Endstücke 9 festgelegt ist, beispielsweise einteilig mit diesem ausgebildet ist und sich durch die Durchgangsöffnung, welche durch den Membranbalg 1 verläuft sowie durch eine Öffnung im anderen Endstück 8 erstreckt. Auf diese Weise kann mittels des Membranbalgs eine auf das Endstück 9 ausgeübte Bewegung über die Stange 21 in einen Vakuumbereich einer Vakuumanlage übertragen werden. Eine mögliche derartige Anwendung ist in den Fig. 16 bis 18 dargestellt. Das Endstück 8 ist an der nur abschnittsweise dargestellten Wand 22 einer Vakuumkammer angebracht, beispielsweise angeschweißt oder angeschraubt. Die Wand 22 weist eine Öffnung zum Durchtritt der Stange 21 auf. Das Endstück 9 ist mit einer (hier bis in den Bereich der Stange 21 sich erstreckenden) Gewindebohrung versehen, in welche das Ende einer Kolbenstange 23 eingeschraubt ist (diese ist in den Fig. 1 bis 15 nicht dargestellt). Die Kolbenstange 23 ist am Kolben 24 einer Kolben-Zylinder-Einheit festgelegt.

In den Figuren ist nur eine Gleitführungseinrichtung des Membranbalgs dargestellt, die im Ausführungsbeispiel von den beiden Ringteilen 10, 11 gebildet wird. In Abhängigkeit von der Länge des Membranbalgs könnte auch mehr als eine solche Gleitführungseinrichtung vorgesehen sein. Es werden dann also in unterschiedliche Zwischenräume 6, die in Richtung der Längsachse 5 voneinander beabstandet sind, jeweils mindestens zwei Ringteile 10, 11 eingesteckt.

Das Rohr 14 umgibt in den Figuren nur einen solchen Abschnitt der Längserstreckung des Membranbalgs, dass die Führungsfunktion durch das Rohr 14 erfüllt ist. Das Rohr 14 könnte sich aber auch über einen größeren Abschnitt der Längserstreckung des Membranbalgs oder über den gesamten Membranbalg erstrecken.

Ein erfindungsgemäßer Membranbalg kann auch ohne eine dessen Durchgangsöffnung durchsetzende Stange 21 eingesetzt werden. Über den Membranbalg kann dann beispielsweise eine kanalartige Verbindung zwischen zwei Vakuumbereichen einer Vakuumanlage geschaffen werden.

### Legende

### zu den Hinweisziffern:

- 1: Membran
- 2: innere Rand
- 3: äußerer Rand
- 4: Öffnung
- 5: Längsachse
- 6: Zwischenraum
- 7: Zwischenraum
- 8: Endstück
- 9: Endstück
- 10: Ringteil
- 11: Ringteil
- 12: Führungsabschnitt
- 13: Halterungsabschnitt
- 14: Rohr
- 15: Oberfläche
- 16: Führungsfläche
- 17: Erhebung
- 18: Vertiefung
- 19: Vertiefung
- 20: Erhebung
- 21: Stange
- 22: Wand
- 23: Kolbenstange
- 24: Kolben
- 25: Kolben-Zylinder-Einheit

## Patentansprüche

1. Membranbalg mit einer Mehrzahl von Membranen (1) mit äußeren Rändern (3) und inneren Rändern (2), wobei in Richtung der zentralen Längsachse (5) des Membranbalgs aufeinanderfolgende Membrane (1) wechselweise im Bereich ihrer inneren Ränder (2) und im Bereich ihrer äußeren Ränder (3) miteinander verschweißt sind, **dadurch gekennzeichnet, dass** der Membranbalg mindestens eine Gleitführungseinrichtung zur Gleitführung an einem den Membranbalg zumindest über einen Teil seiner Längserstreckung umgebenden Rohr (14) aufweist, welche mindestens zwei Ringteile (10, 11) aufweist, die sich in Umfangsrichtung um die Längsachse (5) des Membranbalgs jeweils über höchstens 180° erstrecken und jeweils einen Führungsabschnitt (12) und einen vom Führungsabschnitt (12) in Richtung zur Längsachse (5) abstehenden Halterungsabschnitt (13) aufweisen, der in einen zwischen zwei benachbarten Membranen (1) liegenden Zwischenraum (6) ragt, wobei der Führungsabschnitt (12) sich radial außerhalb der beiden benachbarten Membrane (1), zwischen die der Halterungsabschnitt (13) ragt, erstreckt und eine von der Längsachse (5) des Membranbalgs weg gerichtete Führungsfläche (16) zur Gleitführung an der inneren Oberfläche (15) des den Membranbalg zumindest über einen Teil seiner Längserstreckung umgebenden Rohrs (14) besitzt.

2. Membranbalg nach Anspruch 1, **dadurch gekennzeichnet, dass** der Halterungsabschnitt (13) bezogen auf die Richtung der Längsachse (5) zumindest auf einer Seite eine Vertiefung (18), die mit einer Erhebung (20) der an den Halterungsabschnitt (13) auf dieser Seite angrenzenden Membran (1) zusammenwirkt, oder eine Erhebung (17) aufweist, die mit einer Vertiefung (19) der an den Halterungsabschnitt (13) auf dieser Seite angrenzenden Membran (1) zusammenwirkt.

3. Membranbalg nach Anspruch 2, **dadurch gekennzeichnet, dass** die Halterungsabschnitte (13) der Ringteile (10, 11) der Gleitführungseinrichtung in einer Stellung des Membranbalgs, in welcher keine äußere Kraft auf den Membranbalg einwirkt, formschlüssig gegen ein Herausziehen aus dem Zwischenraum (6) zwischen den beiden benachbarten Membranen (1) gehalten sind.

4. Membranbalg nach Anspruch 2 oder 3, **dadurch gekennzeichnet, dass** der Halterungsabschnitt (13) auf der einen Seite eine Vertiefung (18), die mit einer Erhebung (20) der an den Halterungsabschnitt (13) auf dieser Seite angrenzenden Membran (1) zusammenwirkt, und auf der anderen Seite eine Erhebung (17) aufweist, die mit einer Vertiefung (19) der an den Halterungsabschnitt (13) auf dieser Seite angrenzenden Membran (1) zusammenwirkt.

5. Membranbalg nach einem der Ansprüche 1 bis 4, **dadurch gekennzeichnet, dass** die in Richtung der Längsachse (5) des Membranbalgs gemessene Dicke des Halterungsabschnitts (13) sich in radialer Richtung zur Längsachse (5) des Membranbalgs hin verringert.

6. Membranbalg nach einem der Ansprüche 1 bis 5, **dadurch gekennzeichnet, dass** die Membrane (1) des Membranbalgs im Längsmittelschnitt durch den Membranbalg gesehen gewellt ausgebildet sind, wobei die Wellungen der Membrane (1) bezogen auf die Richtung der Längsachse (5) des Membranbalgs Erhebungen und Vertiefungen an den beiden Seitenflächen der jeweiligen Membran (1) ausbilden.

7. Membranbalg nach einem der Ansprüche 1 bis 6, **dadurch gekennzeichnet, dass** die Ringteile (10, 11) im Längsmittelschnitt durch den Membranbalg gesehen T-förmig ausgebildet sind.

8. Membranbalg nach einem der Ansprüche 1 bis 7, **dadurch gekennzeichnet, dass** sich die Führungsabschnitte (12) der mindestens zwei Ringteile (10, 11) der Gleitführungseinrichtung in Summe in Umfangsrichtung um die Längsachse (5) des Membranbalgs über mehr als 180° erstrecken, wobei die Halterungsabschnitte (13) dieser mindestens zwei Ringteile (10, 11) in den gleichen Zwischenraum (6) zwischen zwei benachbarten Membranen (1) eingesteckt sind.

9. Membranbalg nach Anspruch 8, **dadurch gekennzeichnet, dass** die Gleitführungseinrichtung von zwei Ringteilen (10, 11) gebildet wird, die sich in Umfangsrichtung um die Längsachse (5) des Membranbalgs jeweils über 180° erstrecken.

10. Membranbalg nach einem der Ansprüche 1 bis 9, **dadurch gekennzeichnet, dass** die Führungsflächen (16) der Führungsabschnitte (12) der Ringteile (10, 11) in eine von der Längsachse (5) des Membranbalgs wegweisende Richtung gewölbt ausgebildet sind.

## Claims

1. A diaphragm bellows with a plurality of diaphragms (1) with outer edges (3) and inner edges (2), wherein diaphragms (1) which succeed one another in the direction of the central longitudinal axis (5) of the diaphragm bellows are welded together alternately in the region of their inner edges (2) and in the region of their outer edges (3), **characterised in that** the diaphragm bellows has at least one sliding guidance means for sliding guidance on a tube (14) surrounding the diaphragm bellows at least over a part of its longitudinal extent, which means has at least two ring parts (10, 11) which extend in the peripheral direction about the longitudinal axis (5) of the diaphragm bellows in each case over at most 180° and have in each case a guide portion (12) and a holding portion (13) projecting from the guide portion (12) in the direction of the longitudinal axis (5), which holding portion protrudes into a gap (6) located between two adjacent diaphragms (1), wherein the guide portion (12) extends radially outside the two adjacent diaphragms (1) between which the holding portion (13) protrudes, and has a guide face (16) directed away from the longitudinal axis (5) of the diaphragm bellows for sliding guidance on the inner surface (15) of the tube (14) surrounding the diaphragm bellows at least over a part of its longitudinal extent.

2. A diaphragm bellows according to Claim 1, **characterised in that** the holding portion (13), relative to the direction of the longitudinal axis (5), has at least on one side an indentation (18) which cooperates with an elevation (20) of the diaphragm (1) adjoining the holding portion (13) on this side, or has an elevation (17) which cooperates with an indentation (19) of the diaphragm (1) adjoining the holding portion (13) on this side.

3. A diaphragm bellows according to Claim 2, **characterised in that** the holding portions (13) of the ring parts (10, 11) of the sliding guidance means, in a position of the diaphragm bellows in which no external force is acting on the diaphragm bellows, are held in positive manner against being pulled out of the gap (6) between the two adjacent diaphragms (1).

4. A diaphragm bellows according to Claim 2 or 3, **characterised in that** the holding portion (13) on the one side has an indentation (18) which cooperates with an elevation (20) of the diaphragm (1) adjoining the holding portion (13) on this side, and on the other side has an elevation (17) which cooperates with an indentation (19) of the diaphragm (1) adjoining the holding portion (13) on this side.

5. A diaphragm bellows according to one of Claims 1 to 4, **characterised in that** the thickness of the holding portion (13) measured in the direction of the longitudinal axis (5) of the diaphragm bellows decreases in the radial direction towards the longitudinal axis (5) of the diaphragm bellows.

6. A diaphragm bellows according to one of Claims 1 to 5, **characterised in that** the diaphragms (1) of the diaphragm bellows, viewed in a longitudinal central section through the diaphragm bellows, are designed in corrugated manner, with the corrugations of the diaphragm (1) relative to the direction of the longitudinal axis (5) of the diaphragm bellows forming elevations and indentations on the two side faces of the respective diaphragm (1).

7. A diaphragm bellows according to one of Claims 1 to 6, **characterised in that** the ring parts (10, 11), viewed in a longitudinal central section through the diaphragm bellows, are T-shaped.

8. A diaphragm bellows according to one of Claims 1 to 7, **characterised in that** the guide portions (12) of the at least two ring parts (10, 11) of the sliding guidance means in total extend in the peripheral direction about the longitudinal axis (5) of the diaphragm bellows over more than 180°, the holding portions (13) of these at least two ring parts (10, 11) being inserted into the same gap (6) between two adjacent diaphragms (1).

9. A diaphragm bellows according to Claim 8, **characterised in that** the sliding guidance means is formed by two ring parts (10, 11) which extend over 180° in each case in the peripheral direction about the longitudinal axis (5) of the diaphragm bellows.

10. A diaphragm bellows according to one of Claims 1 to 9, **characterised in that** the guide faces (16) of the guide portions (12) of the ring parts (10, 11) are designed in curved manner in a direction pointing away from the longitudinal axis (5) of the diaphragm bellows.

## Revendications

1. Soufflet à membranes comportant plusieurs membranes (1) ayant un bord extérieur (3) et un bord intérieur (2),
- les membranes (1) qui se succèdent dans la direction de l'axe longitudinal central (5) du soufflet à membranes étant soudées entre elles, alternativement dans la région de leur bord intérieur (2) et dans la région de leur bord extérieur (3),
soufflet à membranes **caractérisé en ce qu'**il comprend :
- au moins une installation de guidage à glissement pour guider par glissement dans un tube (14) entourant le soufflet à membranes sur au moins une partie de son extension longitudinale,
- cette installation comportant au moins deux parties d'anneau (10, 11) qui s'étendent sur au plus chaque fois 180° dans la direction périphérique autour de l'axe longitudinal (5) du soufflet à membranes et qui comportent chacune un segment de guidage (12) et un segment de maintien (13) venant en saillie du segment de guidage (12) en direction de l'axe longitudinal (5), ce segment de maintien venant dans l'intervalle (6) entre deux membranes voisines (1),
- le segment de guidage (12) s'étendant radialement au-delà des deux membranes voisines (1) entre le segment de maintien (13) et une surface de guidage (16) tournée à l'opposé de l'axe longitudinal (5) du soufflet à membranes pour le guidage à glissement sur la surface intérieure (15) du tube (14) entourant le soufflet à membranes sur au moins une partie de son extension longitudinale.

2. Soufflet à membranes selon la revendication 1,
**caractérisé en ce que**
selon la direction de l'axe longitudinal (5), le segment de maintien (13) comporte, sur un côté, un creux (18) qui coopère avec un relief (20) du côté de la membrane (1), adjacente au segment de maintien (13) ou une partie en relief (17) qui coopère avec un creux (19) du côté de la membrane adjacente au segment de maintien (13).

3. Soufflet à membranes selon la revendication 2,
**caractérisé en ce que**
le segment de maintien (13) coopère avec les parties d'anneau (10, 11) de l'installation de guidage à glissement dans une position du soufflet à membranes dans laquelle aucune force extérieure n'agit sur le soufflet à membranes, en étant tenu par une liaison par la forme contre l'extraction hors de l'intervalle (6) entre les deux membranes voisines (1).

4. Soufflet à membranes selon la revendication 2 ou 3,
**caractérisé en ce que**
sur un côté, le segment de maintien (13) comporte un creux (18) coopérant avec un relief (20) du côté de la membrane (1) adjacente au segment de maintien (13) et sur l'autre côté, il comporte un relief (17) qui coopère avec un creux (19) du segment de maintien (13) de la membrane adjacente (1).

5. Soufflet à membranes selon l'une des revendications 1 à 4,
**caractérisé en ce que**
l'épaisseur du segment de maintien (13), mesurée dans la direction de l'axe longitudinal (5) du soufflet à membranes, diminue dans la direction radiale par rapport à l'axe longitudinal (5) du soufflet à membranes.

6. Soufflet à membranes selon l'une des revendications 1 à 5,
**caractérisé en ce qu'**
en coupe médiane longitudinale du soufflet à membranes, la membrane (1) du soufflet à membranes a une forme ondulée et les ondulations de la membrane (1) par rapport à la direction de l'axe longitudinal (5) du soufflet à membranes développent des creux et des reliefs sur les deux surfaces latérales de la membrane (1) respective.

7. Soufflet à membranes selon l'une des revendications 1 à 6,
**caractérisé en ce qu'**
en coupe médiane longitudinale à travers le soufflet à membranes, les parties d'anneau (10, 11) ont une forme T.

8. Soufflet à membranes selon l'une des revendications 1 à 7,
**caractérisé en ce que**
les segments de guidage (12) d'au moins deux parties d'anneau (10, 11) de l'installation de guidage à glissement, additionnées, dans la direction périphérique autour de l'axe longitudinale (5) du soufflet à membranes, s'étendent sur plus de 180°,
les segments de maintien (13) d'au moins ces deux parties d'anneau (10, 11) sont engagés dans le même intervalle (6) entre deux membranes voisines (1).

9. Soufflet à membranes selon la revendication 8,
**caractérisé en ce que**
l'installation de guidage à glissement est formée de deux parties d'anneau (10, 11) qui s'étendent chacune sur plus de 180° dans la direction périphérique autour de l'axe longitudinal (5) du soufflet à membranes.

10. Soufflet à membranes selon l'une des revendications 1 à 9,
**caractérisé en ce que**
les surfaces de guidage (16) des segments de guidage (12) des parties d'anneau (10, 11) sont bombées dans la direction opposée à celle tournée vers l'axe longitudinal (5) du soufflet à membranes.
